# EUROPÄISCHE PATENTSCHRIFT

(11) **EP 0 485 547 B1**
(45) Veröffentlichungstag und Bekanntmachung des Hinweises auf die Patenterteilung: **18.01.1995**
(21) Anmeldenummer: 91908828.6
(22) Anmeldetag: 08.05.1991
(51) Int. Cl.: H02K 9/22, H02K 19/34, H02K 16/00, H02K 15/12

(54) **ELEKTRISCHE MASCHINE, VORZUGSWEISE DREHSTROMGENERATOR FÜR KRAFTFAHRZEUGE**
ELECTRICAL MACHINE, PREFERABLY A THREE-PHASE ALTERNATOR FOR MOTOR VEHICLES
MACHINE ELECTRIQUE, DE PREFERENCE ALTERNATEUR TRIPHASE POUR VEHICULES AUTOMOBILES

(30) Priorität: 06.06.1990 DE 4018090
(43) Veröffentlichungstag der Anmeldung: 20.05.1992
(73) Patentinhaber: ROBERT BOSCH GMBH, 70442 Stuttgart (DE)
(72) Erfinder: SCHÄFTLMEIER, Roland, D-7057 Winnenden (DE); PFLÜGER, Gerhard, D-7145 Markgröningen (DE); FAKLER, Bernhard, D-7300 Esslingen (DE); BÜRGER, Klaus-Georg, D-7145 Markgröningen (DE); KNORPP, Albrecht, D-7141 Murr (DE)
(86) Internationale Anmeldenummer: DE9100378
(87) Internationale Veröffentlichungsnummer: WO9119346

(56) Entgegenhaltungen:
- EP-A- 0 062 706
- EP-A- 0 231 785
- DE-U- 8 915 212
- FR-A- 2 218 675
- US-A- 1 584 502
- US-A- 3 758 799
- PATENT ABSTRACTS OF JAPAN, Bd. 10, Nr. 27 (E-378)(2084) 04 Februar 1986; & JP-A-60 187250

## Beschreibung

### Stand der Technik

Die Erfindung geht aus von einer elektrischen Maschine, vorzugsweise einen Drehstromgenerator für Kraftfahrzeuge nach dem Oberbegriff des Patentanspruchs 1.

Aus der JP-Gebrauchsmusteroffenlegung 57-65570 ist bereits bekannt, das Statorgehäuse eines Elektromotors zur Wärmeabführung mit Kühlrippen zu versehen, die gemeinsam mit den ringförmigen Räumen an den Wickelköpfen der Statorwicklung mit einem wärmeleitenden Formharz ausgefüllt sind, nachdem zuvor das Statorblechpaket mit der Statorwicklung in das Gehäuse eingesetzt wurde. Die Wickelköpfe sind dabei in dem Formharz vollständig eingebettet, so daß die in ihnen erzeugte Verlustwärme nach außen abgeführt werden kann. Nachteilig ist bei einer derartig hergestellten elektrischen Maschine, daß zum Einbetten der Wickelköpfe im wärmeleitenden Kunststoff der komplette vorgefertigte Stator mit samt seinem Gehäuse in eine Preß- oder Gießform eingesetzt werden muß, was besondere Maßnahmen zur Abdichtung der Gieß- oder Preßform erfordert. Noch aufwendiger wird eine solche Lösung dann, wenn die elektrische Maschine zwei axial hintereinanderliegende Ständerblechpakte mit Ständerwicklungen hat und wenn zudem diese Systeme in einem topfförmigen Ständergehäuse eingesetzt sind.

Aus der DE-OS 31 28 081 (R. 6932, Figur 5 bis 7) ist ein solcher Drehstromgenerator für Kraftfahrzeuge mit einem Doppel-Generatorsystem in einem geschlossenen, wassergekühlten Gehäuse bekannt (Figur 5), wobei die Wickelköpfe der beiden Systeme frei liegen. Durch die relativ schlechte Wärmeableitung an den Wickelköpfen ist folglich die Leistung einer solchen elektrischen Maschine begrenzt und sie baut im Außendurchmesser relativ groß. Außerdem werden dort die beiden Ständerblechpakte von beiden Seiten her in das zylindrische Ständergehäuse eingesetzt, was bei einer topfförmigen Ausführung des Gehäuses nicht mehr realisierbar ist.

Mit der vorliegenden Lösung wird angestrebt, bei oberflächengekühlten elektrischen Maschinen mit zwei axial hintereinanderliegenden Ständersystemen den Ständer bei guter Wärmeabführung und kompakter Bauweise möglichst kostengünstig herstellen und montieren zu können.

### Vorteile der Erfindung

Die erfindungsgemäße elektrische Maschine mit den kennzeichnenden Merkmalen des Patentanspruchs 1 hat den Vorteil, daß die beiden Ständersysteme in einer Preßform durch den die Wickelköpfe der Ständerwicklungen einbettenden wärmeleitenden Kunststoff zu einer Baueinheit vorgefertigt werden, auf die dann ein ebenfalls vorgefertigtes zylindrisches oder topfförmiges Gehäuse aufgeschrumpft werden kann, so daß aufwendige Preßformen oder Montagevorrichtungen entfallen. Da der Kunststoff ebenso wie die Ständerblechpakete an der Innenfläche des Maschinengehäuses flächig anliegen, wird eine gute Wärmeableitung von den Wickelköpfen zum Gehäuse gewährleistet. Ein weiterer Vorteil besteht darin, daß durch die um eine halbe Nutteilung gegeneinander versetzten Ständerblechpakete der beiden Generatorsysteme bei einer Parallelschaltung der gleichgerichteten Generatorspannungen die Welligkeit der Gleichspannung beträchtlich verringert wird.

Durch die in den Unteransprüchen aufgeführten Maßnahmen ergeben sich vorteilhafte Weiterbildungen und Verbesserungen der im Patentanspruch 1 angegebenen Merkmale. Besonders vorteilhaft ist dabei, wenn als Abstandsmittel ein wärmeleitender Distanzring zwischen den beiden Blechpaketen eingesetzt ist, welcher an seinen Stirnseiten Ausnehmungen, z.B. Schlitze aufweist, in die zur Positionierung an den einander zugewandten Stirnseiten der Ständerblechpakte angebrachte Vorsprünge, z.B. Positionierstifte eingreifen. Dabei ist es zweckmäßig, daß zur Positionierung der Ständerblechpakete die Schlitze an der einen Stirnseite des Distanzringes zu den Schlitzen an der gegenüberliegenden Stirnseite um eine halbe Nutteilung der Ständernuten versetzt sind. Eine verbesserte Wärmeabführung von den äußeren Wickelköpfen läßt sich dadurch erreichen, daß die außenliegenden Wickelköpfe der beiden Ständerwicklungen über den Nutgrunddurchmesser der Nuten in den Ständerblechpakten hinaus durch Prägen erweitert sind, so daß sie möglichst dicht an der Gehäusewand angeordnet sind.

Bei Maschinen mit einem topfförmigen Gehäuse und einem Anschluß beider Ständersysteme auf der Antriebsseite (A-Seite) läßt sich eine kompakte Bauweise mit möglichst kurzen Wegen zur Wärmeabführung in radialer Richtung dadurch erreichen, daß die Anschlußleitungen der hinteren (B-seitigen) Ständerwicklung durch die Nuten des vorderen (A-seitigen) Ständerblechpaketes zu Anschlußteilen an der vorderen Stirnseite des Ständers geführt sind. Zweckmäßigerweise werden dabei die vier Anschlußleitungen der hinteren, im Stern geschalteten Ständerwicklungen durch vier verschiedene Nuten des vorderen Ständerblechpaketes geführt. In vorteilhafter Weise sind die Anschlußleitungen der Ständerwicklung schließlich an der Stirnseite des vorderen (A-seitigen) Wickelkopfes mit Anschlußteilen verschweißt, die in dem die Wickelköpfe einbettenden wärmeleitenden Kunststoff verankert sind.

### Zeichnung

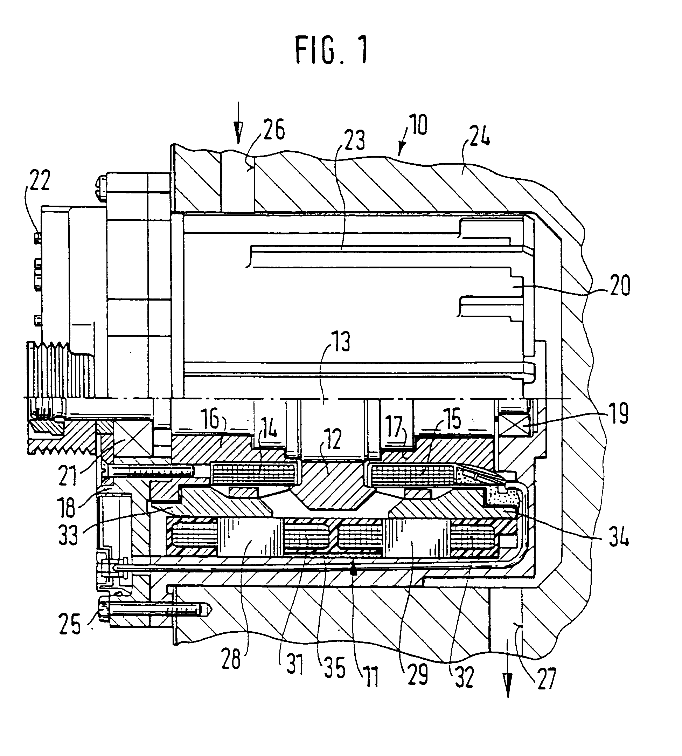

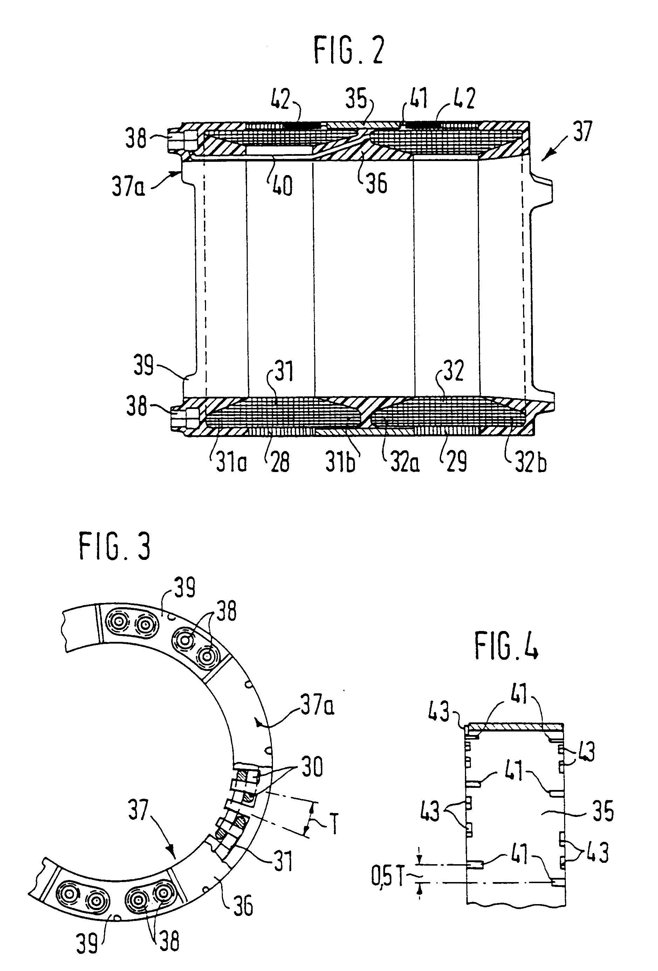

Ein Ausführungsbeispiel der Erfindung ist in der Zeichnung dargestellt und in der nachfolgenden Beschreibung näher erläutert. Es zeigen Figur 1 einen Drehstromgenerator für Kraftfahrzeuge mit zwei Generatorsytemen, teilweise im Querschnitt, Figur 2 zeigt eine vorgefertigte Baueinheit aus den beiden Ständerblechpaketen, ihren Ständerwicklungen, einen dazwischenliegenden Distanzring und deren Einbettung in dem wärmeleitenden Kunststoff im Querschnitt, Figur 3 zeigt die vorgefertigte Baueinheit nach Figur 2 in der Draufsicht von vorn mit einem Ausbruch und Figur 4 zeigt den Distanzring.

### Beschreibung des Ausführungsbeispiels

Der in Figur 1 mit 10 bezeichnete Drehstromgenerator dient zur Stromversorgung von Kraftfahrzeugen mit hohem Leistungsbedarf, Baumaschinen und dgl. Er besteht aus einem Ständer 11, auch Stator genannt, einem Doppel-Leitstückläufer 12 in Klauenpolausführung, der auf einer Antriebswelle 13 befestigt ist sowie aus zwei Erregerwicklungen 14, 15, welche auf zwei Polringen 16, 17 angeordnet und am Metallgehäuse 20 bzw. an einem vorderen Lagerdeckel 18 befestigt sind. Die Antriebswelle 13 ist mit ihrem hinteren Ende über ein Kugellager 19 im Boden eines topfförmigen Metallgehäuses 20 des Generators 10 aufgenommen. Auf der Antriebsseite ist die Antriebswelle 13 über ein weiteres Kugellager 21 im Lagerdeckel 18 aufgenommen, der das Metallgehäuse zur Antriebsseite hin abschließt und der die elektrischen Anschlüsse 22 des Drehstromgenerators 10 sowie in nicht erkennbarer Weise eine Gleichrichter- und Regleranordnung trägt. Der flüssigkeitsgekühlte Drehstromgenerator 10 ist außen am Metallgehäuse 20 mit Abstandsrippen 23 versehen und wird - wie angedeutet - in eine entsprechend gestaltete topfförmige Ausnehmung im Antriebsaggregat 24 des Fahrzeugs eingesetzt und durch Schrauben 25 daran befestigt. Die Kühlflüssigkeit wird über eine Einlaufbohrung 26 zur Außenfläche des Metallgehäuses 20 geführt um die im Generator 10 erzeugte Wärme aufzunehmen und über eine Auslaufbohrung 27 in den Kühlkreislauf der Maschine abzuführen.

Der Ständer 11 des Drehstromgenerators 10 enthält zwei axial hintereinanderliegende Ständerblechpakete 28, 29, in deren Nuten 30 jeweils die Ständerwicklungen 31, 32 eingelegt und miteinander im Stern verschaltet sind. Die Ständerwicklungen 31, 32 wirken jeweils mit dem Doppel-Leitstückläufer 12 zusammen, der zwei Klauenpolsysteme 33, 34 aufweist. Die zwei Ständerblechpakete 28 und 29 werden durch einen Metall-Distanzring 35 zueinander auf Abstand gehalten und um eine halbe Nutteilung gegeneinander versetzt positioniert. Sie sind zusammen mit den Wickelköpfen 31a, 31b und 32a, 32b der Ständerwicklungen 31 und 32 in einem wärmeleitenden Kunststoff 36 zu einer vorgefertigten Baueinheit 37 eingebettet.

Die Figuren 2 und 3 zeigen diese vorgefertigte Baueinheit 37, bei der als wärmeleitender Kunststoff ein mit Glasfaser versetztes Polyesterharz in einer erhitzten Preßform im flüssigem Zustand um die Wickelköpfe der Ständerwicklungen 31 und 32 herum gepreßt wird. Zur besseren Wärmeabführung an das topfförmige Metallgehäuse 20 sind dabei die zwei außenliegenden Wickelköpfe 31a und 32b der beiden Ständerwicklungen 31, 32 über den Nutgrunddurchmesser der Nuten 30 in den Ständerblechpaketen 28, 29 hinaus durch Prägen aufgeweitet, so daß sie nach dem Einsetzen in das Metallgehäuse 20 möglichst dicht unter der Innenfläche des gekühlten Metallgehäuses 20 zu liegen kommen.

Aus Figur 3 ist erkennbar, daß die Wicklungsanschlüsse der beiden Ständerwicklungen 31 und 32 an der vorderen Stirnseite 37a der vorgefertigten Baueinheit 37 in zwei einander gegenüberliegenden Gruppen angeordnet sind, bei denen jeweils vier Anschlußteile 38 in Form von Gewindebuchsen in entsprechende kragenförmige Vorsprünge 39 des die Wickelköpfe einbettenden wärmeleitenden Kunststoffs 36 eingebettet sind. Aus Figur 3 ist erkennbar, daß die Nuten 30 der Ständerblechpakete 28 und 29 nur zur Hälfte von einem Phasenstrang der jeweiligen Ständerwicklung 31, 32 ausgefüllt sind, so daß - wie in Figur 2 für einen Anschlußleiter 40 dargestellt - alle Anschlußleitungen der hinteren (B-seitigen) Ständerwicklung 32 durch die Nuten 30 des vorderen (A-seitigen) Ständerblechpaketes 28 hindurch zu den Anschlußteilen 38 an der Stirnseite 37a der Baueinheit 37 geführt sind. Die Anschlußleitungen 40 der beiden Ständerwicklungen 31, 32 sind an der Stirnseite des vorderen Wickelkopfes 31a mit den Anschlußteilen 38 verschweißt worden, bevor diese in den Vorsprüngen 39 vom wärmeleitenden Kunststoff 36 umpreßt wurden.

Aus Figur 4 ist erkennbar, daß der Distanzring 35, der zwischen den beiden Ständerblechpaketen 28 und 29 eingesetzt ist, an seinen zwei Stirnseiten mehrere Ausnehmungen in Form von Schlitzen 41 aufweist, in die zur Positionierung der Ständerblechpakete 28 und 29 Positionierstifte 42 eingreifen, die symmetrisch angeordnet in entsprechende Bohrungen der Ständerblechpakete 28, 29 eingepreßt sind. Da die Ständerblechpakete 28 und 29 außerdem durch mehrere am Umfang verteilte, nicht erkennbare Niete zusammengehalten werden, sind an den beiden Stirnseiten des Distanzringes 35 außerdem noch entsprechend angeordnete Ausnehmungen 43 ausgefräst, in welche die Nietköpfe der Blechpaketnieten hineinragen. Schließlich ist aus Figur 4 auch erkennbar, daß die Schlitze 41 an der einen Stirnseite des Distanzringes 35 zu den Schlitzen 41 an der gegenüberliegenden Stirnseite um eine halbe Nutteilung (0,5 T) der Ständernuten 30 gegeneinander versetzt sind. Bei einer Parallelschaltung der gleichgerichteten Spannungen in den Ständerwicklungen 31 und 32 wird hierdurch die Welligkeit der abgegebenen Gleichspannung verringert.

## Patentansprüche

1. Elektrische Maschine, vorzugsweise Drehstromgenerator für Fahrzeuge, mit einem oberflächengekühlten Ständer mit zwei axial hintereinanderliegenden Ständerwicklungen (31, 32), die jeweils in Nuten eines Ständerblechpaketes eingelegt sind, mit einer Antriebswelle und zwei mit den Ständerwicklungen zusammenwirkenden Klauenpolsystemen mit je einer Erregerwicklung und mit die Antriebswelle aufnehmenden Lagerstellen an den Stirnseiten der Maschine, wobei die stirnseitig vorstehenden Wickelköpfe der Ständerwicklungen und die beiden Blechpakete von einem Metallgehäuse umgeben und wärmeleitend darin eingepaßt sind, dadurch gekennzeichnet, daß die zwei Ständerblechpakete (28, 29) durch Abstandsmittel (35) um bis zu einer halben Nutteilung (0,5 T) gegeneinander versetzt positioniert und zusammen mit den Wickelköpfen (31a, b, 32a, b) der Ständerwicklungen (31, 32) in einem wärmeleitenden Kunststoff (36) zu einer vorgefertigten Baueinheit (37) eingebettet sind.

2. Elektrische Maschine nach Anspruch 1, dadurch gekennzeichnet, daß als Abstandsmittel ein wärmeleitender Distanzring (35) zwischen den beiden Ständerblechpaketen (28, 29) eingesetzt ist, welcher an seinen beiden Stirnseiten Ausnehmungen (41) aufweist, in die zur Positionierung der Ständerblechpakete (28, 29) an ihren einander zugewandten Stirnseiten angebrachte Vorsprünge (42) eingreifen.

3. Elektrische Maschine nach Anspruch 2, dadurch gekennzeichnet, daß mehrere an den Stirnseiten der Ständerblechpakte (28, 29) verteilt angebrachte Positionierstifte (42) in entsprechende Schlitze (41) an den Stirnseiten des Distanzringes (35) eingreifen.

4. Elektrische Maschine nach Anspruch 3, dadurch gekennzeichnet, daß die Schlitze (41) an der einen Stirnseite des Distanzringes (35) zu den Schlitzen (41) an der gegenüberliegenden Stirnseite um eine halbe Nutteilung (0,5 T) der Ständernuten (30) gegeneinander versetzt sind.

5. Elektrische Maschine nach einem der Ansprüche 1 bis 4, dadurch gekennzeichnet, daß die beiden außenliegenden Wickelköpfe (31a, 32b) der beiden Ständerwicklungen (31, 32) über den Nutgrunddurchmesser der Nuten (30) in den Ständerblechpaketen (28, 29) hinaus durch Prägen aufgeweitet sind.

6. Elektrische Maschine nach Anspruch 1, dadurch gekennzeichnet, daß bei einem topfförmigen Metallgehäuse (20) die Anschlußleitungen (40) der hinteren (B-seitigen) Ständerwicklung (32) durch die Nuten (30) des vorderen (A-seitigen) Ständerblechpaketes (28) zu Anschlußteilen (38) an der vorderen Stirnseite des Ständers (11) geführt sind.

7. Elektrische Maschine nach Anspruch 6, dadurch gekennzeichnet, daß die vier Anschlußleitungen (40) der hinteren im Stern geschalteten Ständerwicklung (32) durch vier verschiedene Nuten (30) des vorderen Blechpaketes (28) hindurchgeführt sind.

8. Elektrische Maschine nach Anspruch 6 oder 7, dadurch gekennzeichnet, daß die Anschlußleitungen (40) der beiden Ständerwicklungen (31, 32) an der Stirnseite des vorderen Wickelkopfes (31a) mit den Anschlußteilen (38) verschweißt sind, die in dem den Wickelkopf (31a) einbettenden, wärmeleitenden Kunststoff (36) verankert sind.

## Claims

1. Electric machine, preferably a three-phase alternator for vehicles, having a surface-cooled stator with two stator windings (31, 32) which are located axially one behind the other and are each inserted in slots of a laminated stator core, with a drive shaft and two claw-pole systems, which interact with the stator windings, with one excitor winding each and with bearing points which receive the drive shaft at the end sides of the machine, the end windings of the stator windings which end windings protrude at the end sides and the two laminated cores being surrounded by a metal housing and fitted therein in a thermally conducting fashion, being characterized in that the two laminated stator cores (28, 29) are positioned offset with respect to one another by up to one half slot pitch (0.5 T) by means of spacers (35) and are embedded together with the end windings (31a, b, 32a, b) of the stator windings (31, 32) in a thermally conducting plastic (36) to form a prefabricated component (37).

2. Electric machine according to Claim 1, characterized in that a thermally conducting spacing ring (35) is inserted between the two laminated stator cores (28, 29) as spacers, which spacing ring (35) has at its two end sides recesses (41) into which projections (42) which are attached at their end sides facing one another engage in order to position the laminated stator cores (28, 29).

3. Electric machine according to Claim 2, characterized in that a plurality of positioning pins (42) which are attached distributed over the end sides of the laminated stator cores (28, 29) engage in corresponding slits (41) at the end sides of the spacing ring (35).

4. Electric machine according to Claim 3, characterized in that the slits (41) at the one end side of the spacing ring (35) are arranged offset with respect to the slits (41) at the opposite end side by one half slot pitch (0.5 T) of the stator slots (30).

5. Electric machine according to one of Claims 1 to 4, characterized in that the two external end windings (31a, 32b) of the two stator windings (31, 32) are widened beyond the basic diameter of the slots (30) in the laminated stator cores (28, 29) by stamping.

6. Electric machine according to Claim 1, characterized in that in a pot-shaped metal housing (20) the connection lines (40) of the rear (B-side) stator winding (32) are led through the slots (30) of the front (A-side) laminated stator core (28) to connection components (38) at the front end side of the stator (11).

7. Electric machine according to Claim 6, characterized in that the four connection lines (40) of the rear, star-connected stator winding (32) are led through four different slots (30) of the front laminated core (28).

8. Electric machine according to Claim 6 or 7, characterized in that the connection lines (40) of the two stator windings (31, 32) are welded at the end side of the front end winding (31a) to the connection components (38) which are anchored in the thermally conducting plastic (36) which embeds the end winding (31a).

## Revendications

1. Moteur électrique, de préférence alternateur triphasé pour véhicules, avec un stator dont la surface est refroidie, avec deux enroulements de stator (31, 32) situés axialement l'un derrière l'autre et qui sont respectivement insérés dans des rainures d'un paquet de tôles de stator, avec un arbre d'entraînement et deux systèmes de pôles à griffes coopérant avec les enroulements du stator, avec chacun un enroulement d'excitation et avec des paliers qui supportent l'arbre d'entraînement sur les faces frontales du moteur, les têtes de bobines qui font saillie sur les côtés frontaux des enroulements de stator, et les deux paquets de tôles, étant entourés par un carter métallique et incorporés dedans en conduisant la chaleur, moteur électrique caractérisé en ce que les deux paquets de tôles de stator (28, 29) sont positionnés par des moyens d'écartement (35) de façon décalée l'un par rapport à l'autre d'une distance allant jusqu'à un demi pas d'encoches (0,5 T), et sont noyés en même temps que les têtes de bobines (31a, 31b, 32a, 32b) des enroulements de stator (31, 32), dans une matière plastique qui conduit la chaleur (36), de façon à former une unité préfabriquée (37).

2. Moteur électrique selon la revendication 1, caractérisé en ce qu'on insère comme moyen d'écartement une bague d'écartement (35) qui conduit la chaleur entre les deux paquets de tôles de stator (28, 29), bague qui présente sur ses deux faces frontales des évidements (41) dans lesquels viennent en prise des saillies (42) situées sur les faces frontales tournées l'une vers l'autre des paquets de tôles de stator (28, 29) afin de les positionner.

3. Moteur électrique selon la revendication 2, caractérisé en ce que plusieurs tenons de positionnement (42) sont répartis sur les faces frontales des paquets de tôles de stator (28, 29), en prise dans des fentes correspondantes (41) sur les faces frontales de la bague d'écartement (35).

4. Moteur électrique selon la revendication 3, caractérisé en ce que les fentes (41) sur l'une des faces frontales de la bague d'écartement (35) sont décalées par rapport aux fentes (41) sur la face frontale opposée, d'un demi pas d'encoches (0,5 T) des rainures de stator (30).

5. Moteur électrique selon l'une des revendications 1 à 4, caractérisé en ce que les deux têtes de bobines situées à l'extérieur (31a, 32b) des deux enroulements de stator (31, 32) sont évasées par matriçage, au-delà du diamètre de base des rainures (30), dans les paquets de tôles de stator (28, 29).

6. Moteur électrique selon la revendication 1, caractérisé en ce que, dans le cas d'un carter métallique en forme de pot (20), on amène les lignes de raccordement (40) de l'enroulement arrière du stator (32) (du côté B) à travers les rainures (30) du paquet de tôles de stator avant (28) (du côté A) aux pièces de raccordement (38) sur la face frontale avant du stator (11).

7. Moteur électrique selon la revendication 6, caractérisé en ce qu'on fait passer les quatre lignes de raccordement (40) de l'enroulement arrière du stator (32), qui est monté en étoile, à travers quatre rainures différentes (30) du paquet de tôles avant (28).

8. Moteur électrique selon la revendication 6 ou 7, caractérisé en ce que les lignes de raccordement (40) des deux enroulements de stator (31, 32) sont soudées sur la face frontale de la tête de bobine avant (31a) aux pièces de raccordement (38) qui sont ancrées dans la matière plastique (36) dans laquelle est noyée la tête de bobine (31a) et qui conduit la chaleur.
